# DEMANDE DE BREVET EUROPEEN

(11) **EP 1 085 255 A1**
(43) Date de publication de la demande: **21.03.2001**
(21) Numéro de dépôt: 00420188.5
(22) Date de dépôt: 07.09.2000
(51) Int. Cl.: F21S 10/00

(54) **Dispositif lumineux**

(30) Priorité: 14.09.1999 FR 9911613
(71) Demandeur: ROSET S.A., 01470 Serrières de Briord (FR)
(72) Inventeur: Frances, Elsa, 75011 Paris (FR); Policar, Jean-Michel, 75015 Paris (FR)
(74) Mandataire: Maureau, Philippe

(57) **Abrégé**

Ce dispositif (1) comprend :
- un support (2) présentant une surface plane, la paroi (22) de ce support (2) délimitant cette surface plane incluant un matériau qui apparaît opaque lorsqu'il n'est pas éclairé mais qui permet le passage de lumière à travers lui lorsqu'il est éclairé ;
- une source lumineuse (3) placée en dessous de ladite paroi (22) du support (2) ;
- une pièce (4) en matériau transparent ou translucide, comprenant une embase et au moins un aimant (30) placé au niveau de cette embase ; et
- un système de commande de l'éclairage de ladite source lumineuse (3), comprenant au moins un capteur (18) sensible à la présence ou à l'absence d'un champ magnétique, qui forme un interrupteur d'ouverture/fermeture du circuit alimentant la source lumineuse (3).

## Description

### La présente invention concerne un dispositif lumineux.

Le but de l'invention est de fournir un dispositif lumineux ayant un aspect décoratif et un fonctionnement original, cet aspect et ce fonctionnement permettant notamment l'utilisation du dispositif sur des meubles de qualité élevée.

Selon l'invention, ce dispositif comprend :
- un support présentant une surface plane, la paroi de ce support délimitant cette surface plane incluant un matériau qui apparaît opaque lorsqu'il n'est pas éclairé mais qui permet le passage de lumière à travers lui lorsqu'il est éclairé ;
- une source lumineuse placée en dessous de ladite paroi du support, la lumière produite par cette source lumineuse pouvant passer au travers de cette paroi de manière à être visible depuis l'extérieur du support ;
- une pièce en matériau transparent ou translucide, comprenant une embase et au moins un aimant placé au niveau de cette embase ; cette embase permet de poser la pièce en matériau transparent ou translucide sur ladite surface plane, en divers emplacements de cette surface, et notamment en regard de ladite source lumineuse, auquel cas cette pièce en matériau transparent ou translucide constitue un diffuseur de la lumière émise par la source lumineuse ; et
- un système de commande de l'éclairage de ladite source lumineuse, comprenant au moins un capteur sensible à la présence ou à l'absence d'un champ magnétique, qui forme un interrupteur d'ouverture/fermeture du circuit alimentant la source lumineuse, ce capteur étant situé immédiatement en dessous de ladite paroi du support de manière à ne pas être visible depuis l'extérieur du support mais à être sensible au champ magnétique produit par le ou les aimants de ladite pièce en matériau transparent ou translucide.

Cette pièce peut ainsi être posée en différents emplacements de la surface plane du support. Aucun éclairage ne se produit tant que cette pièce se trouve en dehors de la position dans laquelle le ou les aimants qu'elle comprend sont en regard du ou des capteurs précités. Lorsque cette position est atteinte, le ou les capteurs sont actionnés dans le sens de l'éclairage de la source lumineuse, et ladite pièce constitue alors un diffuseur de la lumière émise par cette source lumineuse.

Le dispositif selon l'invention a ainsi un aspect décoratif et un fonctionnement original, en ce sens que ladite paroi du support apparaît uniformément opaque et que le déplacement de ladite pièce en matériau transparent ou translucide sur lui permet l'apparition soudaine d'une lumière venant éclairer cette pièce.

De préférence, la pièce en matériau transparent ou translucide comprend un nombre d'aimants nettement supérieur au nombre de capteurs, par exemple de l'ordre de six fois supérieur, de façon à faciliter le positionnement des aimants en regard des capteurs, en limitant ou supprimant toute nécessité d'orienter la pièce autour d'un axe perpendiculaire à la surface plane du support pour amener ces aimants en regard de ces capteurs.

Avantageusement, le support présente une conformation servant de point de repère pour le positionnement de la pièce transparente ou translucide en vue de provoquer l'éclairage de la source lumineuse.

Cette conformation facilite ainsi la recherche de la position de la pièce transparente ou translucide qui provoque l'éclairage de la source lumineuse.

Selon une forme de réalisation possible de l'invention dans ce cas, le support présente une zone dont la forme correspond à la forme de l'embase de la pièce en matériau transparent ou translucide, et ladite position de cette pièce qui permet l'éclairage de la source lumineuse correspond à la venue de l'embase de cette pièce à une distance déterminée du ou des bords correspondants du support qui délimitent ladite zone. En particulier, le support peut présenter un angle arrondi et la pièce en matériau transparent ou translucide peut présenter une embase ayant une forme de révolution, ladite position de cette pièce permettant l'éclairage de la source lumineuse correspondant à la venue en coïncidence de l'axe générant l'arrondi dudit angle et de l'axe de ladite embase.

Pour sa bonne compréhension, l'invention est à nouveau décrite ci-dessous en référence au dessin schématique annexé représentant, à titre d'exemple non limitatif, une forme de réalisation préférée du dispositif qu'elle concerne.

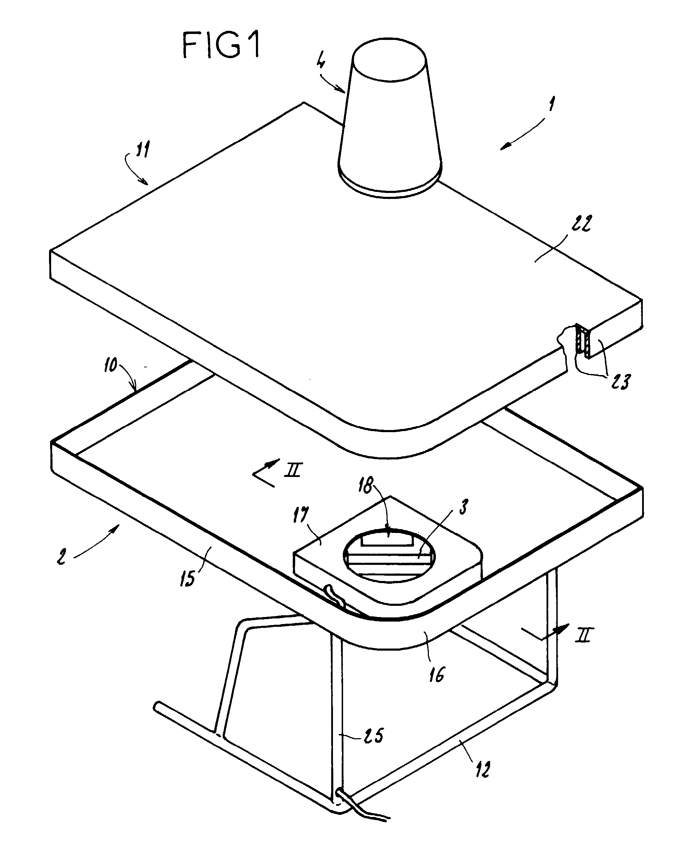

La figure 1 en est une vue en perspective éclatée ;
la figure 2 en est une vue en coupe selon la ligne II-II de la figure 1, dans une position relative d'une pièce et d'un support qu'il comprend, et
la figure 3 en est une vue similaire à la figure 2, dans une autre position relative de cette pièce et de ce support.

Les figures représentent un dispositif lumineux 1, qui comprend un support 2, une source lumineuse 3, une pièce 4 en matériau transparent ou translucide et un système de commande de l'éclairage de la source lumineuse 3.

Le support 2 est, dans l'exemple représenté, constitué par une tablette du genre de celle placée dans un salon. Ce support 2 comprend un plateau formé par un fond 10 et par un couvercle 11, et un piétement 12 de support de ce plateau.

Le fond 10 comprend une paroi périphérique 15 présentant, au niveau de l'un des angles 16 du plateau, une forme arrondie, et comprend un boîtier 17 situé près de cet angle 16. Le boîtier 17 présente une ouverture supérieure circulaire dont l'axe coïncide avec l'axe de la courbure de l'angle 16. Il contient la source lumineuse 3, et un capteur 18 sensible à la présence ou à l'absence d'un champ magnétique, par exemple un bilame comprenant des parties qui viennent en contact sous l'action d'un champ magnétique. Ces parties mobiles ferment ainsi le circuit électrique et font office d'interrupteur. Ce capteur 18 est situé immédiatement en dessous de la paroi principale 22 du couvercle 11 lorsque ce dernier est placé sur le fond 10.

Le couvercle 11 présente, outre la paroi 22, deux parois périphériques 23 délimitant entre elles une rainure, ces parois 23 étant destinées à être engagées à cheval sur la paroi 15 du fond 10. Ce couvercle 11 est en un matériau qui apparaît opaque lorsqu'il n'est pas éclairé mais qui permet le passage de lumière à travers lui lorsqu'il est éclairé. Il peut s'agir notamment d'un polyester translucide dont la face intérieure comporte un film photo-réfléchissant, ou d'un matériau thermoplastique tel qu'un polycarbonate à 33 % de diffusion lumineuse.

L'un des montants 25 du piétement 12 est creux et permet le passage des fils d'alimentation électrique de la source lumineuse 3.

Cette dernière est, dans l'exemple représenté, une lampe fluorescente compacte, avec ballast.

La pièce 4 présente une forme tronconique et une embase lui permettant d'être posée sur la paroi 22. Au niveau de cette embase, la pièce 4 comprend vingt-cinq logements régulièrement répartis sur un cercle de même diamètre que celui sur lequel est placé le capteur 18. Chacun de ces logements reçoit un aimant 30. Cette embase de la pièce 4 est en outre recouverte par une feutrine permettant le glissement de la pièce 4 sur la paroi 22.

La pièce 4 peut être en polyméthylmétacrylate (PMMA) ou en d'autres matériaux propres à diffuser la lumière, tels que du verre, du polycarbonate, un PVC sous forme de film ou une matière plastique thermoformable.

Le système de commande de l'éclairage de la source lumineuse 3 est constitué par le capteur 18 et les aimants 30 précités.

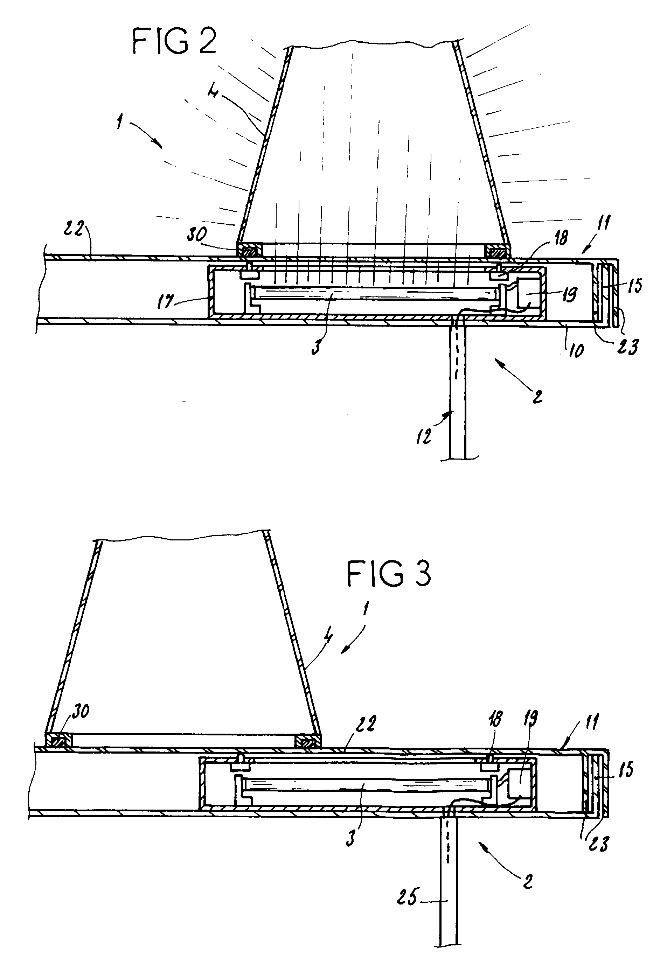

Ainsi que cela se déduit des figures 2 et 3, la pièce 4 peut être posée en différents emplacements de la paroi 22. Aucun éclairage ne se produit tant que cette pièce 4 se trouve en dehors de la position dans laquelle les aimants 30 sont en regard du capteur 18, ainsi que le montre la figure 3. Lorsque cette position est atteinte, comme le montre la figure 2, le capteur 18 détecte le champ magnétique produit par le ou les aimants 30 qui lui sont proches, et le bilame qu'il comprend ferme le circuit d'alimentation de la source lumineuse 3. La pièce 4 constitue alors un diffuseur de la lumière émise par la lampe 3.

L'angle arrondi 16 sert de point de repère pour le positionnement de la pièce 4 dans la position d'éclairage, cette position correspondant à la venue en coïncidence de l'axe générant l'arrondi dudit angle 16 et de l'axe de la pièce 4.

L'invention fournit ainsi un dispositif lumineux ayant un aspect décoratif et un fonctionnement original, en ce sens que ladite paroi 22 apparaît uniformément opaque et que le déplacement de la pièce 4 sur elle permet l'apparition soudaine d'une lumière venant éclairer cette pièce 4.

Cet aspect et ce fonctionnement permettent notamment l'utilisation du dispositif 1 sur des meubles de qualité élevée.

## Revendications

1. Dispositif lumineux caractérisé en ce qu'il comprend :
- un support (2) présentant une surface plane, la paroi (22) de ce support (2) délimitant cette surface plane incluant un matériau qui apparaît opaque lorsqu'il n'est pas éclairé mais qui permet le passage de lumière à travers lui lorsqu'il est éclairé ;
- une source lumineuse (3) placée en dessous de ladite paroi (22) du support (2), la lumière produite par cette source lumineuse (3) pouvant passer au travers de cette paroi (22) de manière à être visible depuis l'extérieur du support (2) ;
- une pièce (4) en matériau transparent ou translucide, comprenant une embase et au moins un aimant (30) placé au niveau de cette embase ; cette embase permet de poser la pièce (4) en matériau transparent ou translucide sur ladite surface plane, en divers emplacements de cette surface, et notamment en regard de ladite source lumineuse (3), auquel cas cette pièce (4) en matériau transparent ou translucide constitue un diffuseur de la lumière émise par la source lumineuse (3) ; et
- un système de commande de l'éclairage de ladite source lumineuse (3), comprenant au moins un capteur (18) sensible à la présence ou à l'absence d'un champ magnétique, qui forme un interrupteur d'ouverture/fermeture du circuit alimentant la source lumineuse (3), ce capteur (18) étant situé immédiatement en dessous de ladite paroi (22) du support (2) de manière à ne pas être visible depuis l'extérieur du support (2) mais à être sensible au champ magnétique produit par le ou les aimants (30) de ladite pièce (4) en matériau transparent ou translucide.

2. Dispositif selon la revendication 1, caractérisé en ce que la pièce (4) en matériau transparent ou translucide comprend un nombre d'aimants (30) nettement supérieur au nombre de capteurs (18).

3. Dispositif selon la revendication 1 ou la revendication 2, caractérisé en ce que le support (2) présente une conformation (16) servant de point de repère pour le positionnement de la pièce (4) transparente ou translucide en vue de provoquer l'éclairage de la source lumineuse (3).

4. Dispositif selon la revendications 3, caractérisé en ce que le support (2) présente une zone (16) dont la forme correspond à la forme de l'embase de la pièce (4) en matériau transparent ou translucide, et en ce que ladite position de cette pièce (4) qui permet l'éclairage de la source lumineuse (3) correspond à la venue de l'embase de la pièce (4) à une distance déterminée du ou des bords correspondants du support (2) qui délimitent ladite zone (16).

5. Dispositif selon la revendication 4, caractérisé en ce que le support (2) présente un angle arrondi (16) et en ce que la pièce (4) en matériau transparent ou translucide présente une embase ayant une forme de révolution, ladite position de cette pièce (4) permettant l'éclairage de la source lumineuse (3) correspondant à la venue en coïncidence de l'axe générant l'arrondi dudit angle (16) et de l'axe de ladite embase.
